# FASCICULE DE BREVET EUROPEEN

(11) **EP 0 655 565 B1**
(45) Date de publication et mention de la délivrance du brevet: **06.10.1999**
(21) Numéro de dépôt: 94400877.0
(22) Date de dépôt: 22.04.1994
(51) Int. Cl.: F16F 7/12, B61F 19/04, B61F 1/08, B60R 19/18, B62D 21/15, E01F 15/00, B61D 15/06

(54) **Dispositifs et procédé d'amortissement de choc, ossature et véhicule comportant de tels dispositifs d'amortissement de choc**
Stossdämpfende Vorrichtungen und Methode, Gerippe und Fahrzeug die diese stossdämpfende Vorrichtungen aufweisen
Shock absorbing devices and methods, frame and vehicle having such shock absorbing devices

(30) Priorité: 25.11.1993 FR 9314096
(43) Date de publication de la demande: 31.05.1995
(73) Titulaire: GEC ALSTHOM TRANSPORT SA, 75016 Paris (FR)
(72) Inventeur: Dannawi, Marwan, F-44072 Nantes Cedex 03 (FR); Barjolle, Jean-Pierre, F-17000 La Rochelle (FR); Jeunehomme, Sylvie, F-17220 Salles sur mer (FR)
(74) Mandataire: Gosse, Michel

(56) Documents cités:
- EP-A- 0 467 193
- DE-A- 3 238 025
- DE-A- 4 224 489
- DE-C- 635 018
- FR-A- 2 698 840
- GB-A- 2 089 464
- REVUE GENERALE DES CHEMINS DE FER, no.11, Novembre 1993, PARIS FR pages 45 - 57 L.-M. CLEON '3. Résistance passive Application au TGV 2N'
- REVUE GENERALE DES CHEMINS DE FER, no.11, Novembre 1993, PARIS FR pages 59 - 63 H. LAGNEAU '4. Résistance passive Application aux matériels de la vie quotidienne'

## Description

La présente invention concerne des dispositifs d'amortissement de choc ainsi qu'un véhicule comportant de tels dispositifs d'amortissement de choc.

On connaît des dispositifs d'amortissement de choc constitués par des systèmes à déformation réversible basés sur une dégradation de l'énergie par frottement sec ou visqueux. Ainsi, dans le domaine ferroviaire ils sont installés dans les tampons et dans les cartouches des attelages automatiques. Ces systèmes présentent l'inconvénient d'avoir un bas niveau d'absorption d'énergie, environ 50 kJ par organe.

Un autre dispositif amortisseur de choc est constitué par le bouclier placé sur une motrice de train, en particulier pour train à grande vitesse. Un tel bouclier est constitué par une structure en nid d'abeilles ou en tubes travaillant en compression. Il s'agit d'une pièce rapportée et encombrante qui présente l'inconvénient de ne pas intervenir dans la transmission des efforts longitudinaux dans le châssis. En outre, cette pièce ne protège que le conducteur.

La sécurité des voyageurs d'un train en cas de collision est actuellement prise en compte de manière très sérieuse. En effet, l'augmentation de la vitesse de roulement des trains accroît les risques en cas d'accident. Une série d'accidents récents à démontré que les progrès réalisés dans le domaine de la signalisation n'écartaient pas tous les risques de collision.

Il s'avère donc nécessaire de disposer d'un dispositif d'amortissement de choc plus efficace que les dispositifs existant actuellement. Ce dispositif doit, en cas de choc, provoquer un écrasement selon l'axe principal de l'engin de traction pour éviter que l'engin ne se mette de travers sur la voie. Il doit également ne pas être trop lourd pour respecter les limites de poids par essieu imposées pour les trains. Il doit aussi être de faible encombrement, le gain de place étant très recherché aussi bien dans les engins de traction que dans les voitures de voyageurs.

La présente invention permet de pallier les inconvénients de l'art antérieur et de satisfaire les exigences d'efficacité, de poids et d'encombrement. Elle s'applique particulièrement bien au domaine ferroviaire où la quantité d'énergie à absorber en cas de choc peut être considérable. Elle peut cependant s'appliquer à d'autres domaines afin d'amortir le choc éventuel entre un engin mobile et un obstacle ou entre deux engins mobiles (voitures automobiles, ascenseurs, etc...).

L'efficacité du dispositif proposé réside dans la forme particulière que présente sa section dans la direction du choc.

Le document GB-A-2 089 464 décrit un dispositif d'amortissement de choc conforme au préambule de la revendication 1.

L'invention a pour objet un dispositif d'amortissement de choc et un véhicule tel que définis dans les revendications 1 et 7.

D'autres buts et avantages appraîtrons à la lecture de la description du dispositif d'amortissement de choc de l'invention faite en liaison avec les dessins dans lesquels:
- la figure 1 représente un dispositif d'amortissement de choc, ce dispositif étant constitué alun seul élément longitudinal,
- la figure 2 représente une variante de réalisation d'un dispositif d'amortissement de choc,
- la figure 3 représente un dispositif d'amortissement de choc selon l'invention,
- la figure 4 représente un châssis de véhicule ferroviaire incorporant des dispositifs d'amortissement de choc selon l'invention,
- la figure 5 est une vue partielle du châssis du véhicule ferroviaire de la figure 4 selon la coupe V-V,
- la figure 6 est une vue partielle du châssis du véhicule ferroviaire de la figure 4 selon la coupe VI-VI,
- la figure 7 est une vue du châssis du véhicule ferroviaire de la figure 4 selon la coupe VII-VII,
- la figure 8 représente une ossature d'une caisse de véhicule ferroviaire incorporant des dispositifs d'amortissement de choc selon l'invention,
- la figure 9 est une vue partielle de l'ossature d'une caisse de véhicule ferroviaire de la figure 8 selon la coupe IX-IX,
- la figure 10 est une vue partielle de l'ossature d'une caisse de véhicule ferroviaire de la figure 8 selon la coupe X-X,
- la figure 11 est une vue en coupe de l'ossature de la caisse de véhicule ferroviaire de la figure 8,
- les figures 12 a à d et 13 a et b représentent différents stades de l'évolution, respectivement des troisièmes et des quatrièmes dispositifs d'amortissement de choc, lors de leur écrasement,
- les figures 14a,b à 17a,b représentent les quatre phases successives de déformation de l'ossature de la caisse de véhicule ferroviaire incorporant les dispositifs d'amortissement de choc selon l'invention.

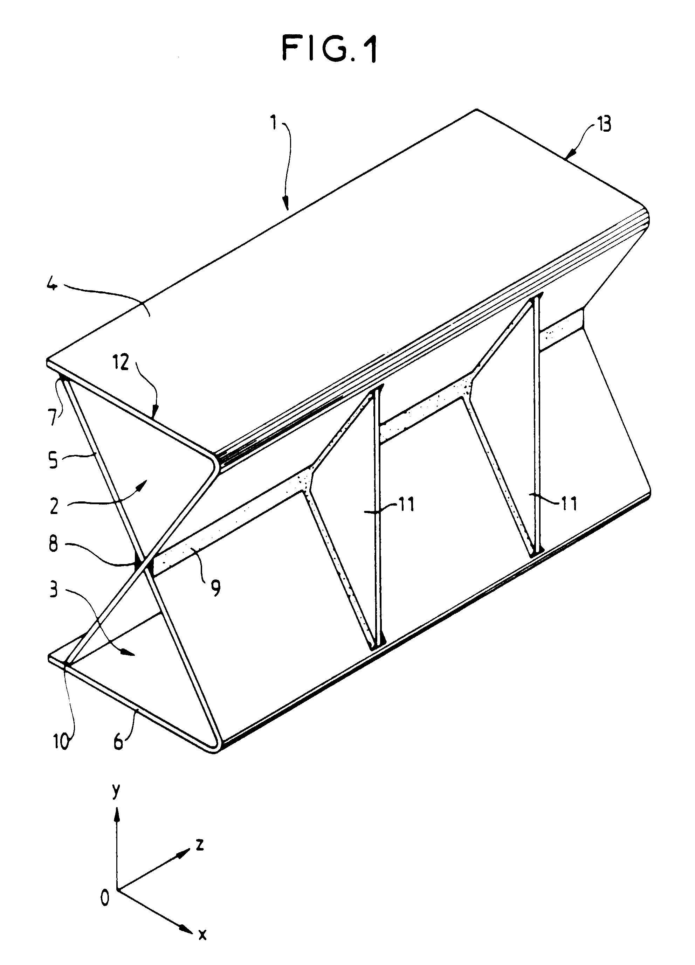

Le dispositif d'amortissement de choc représenté à la figure 1 est constitué d'un seul élément longitudinal 1 aligné dans la direction du choc Oz. Cet élément a sa section située dans le plan xOy, plan perpendiculaire à la direction du choc, qui présente la forme de deux triangles 2 et 3 ayant chacun un sommet commun. Les triangles 2 et 3 ont pour côtés des parois métalliques de l'élément 1. Les côtés des triangles peuvent être droits ou légèrement incurvés. Les angles des triangles peuvent être arrondis ou non comme le montre la figure.

L'élément 1 est réalisé en plaque mince. Dans le cas de la figure 1, il a été constitué à partir de trois plaques 4, 5 et 6 soudées ensemble par des cordons de soudure 7, 8, 9 et 10. Les plaques 4 et 6 ont été pliées de façon à former des angles pour les triangles 2 et 3.

La matière constituant les plaques minces dépend de la quantité d'énergie que le dispositif est destiné à absorber. L'acier permet l'absorption d'une grande quantité d'énergie.

L'élément 1 est réalisé en plaque mince pour que, sous l'impact d'un choc d'énergie suffisante, l'élément s'écrase en accordéon dans la direction du choc. Les essais aux chocs ont montrés que cette structure possède un comportement doublement avantageux. D'une part, elle peut s'écraser d'environ 70% de sa longueur initiale ce qui est exceptionnel. D'autre part, l'écrasement se fait sans flambage généralisé de l'élément, celui-ci s'écrasant sans déviation de direction.

L'épaisseur des plaques minces est fonction des dimensions extérieures de l'élément. Il faut que sous l'effet d'un choc, l'élément puisse s'écraser en accordéon, par flambages localisés des plaques minces. Le calcul et l'expérimentation permettent d'optimiser l'épaisseur en fonction des dimensions extérieures de l'élément pour une quantité d'énergie à absorber donnée.

Pour des raisons de symétrie, les meilleurs résultats sont obtenus pour une section d'élément comportant deux triangles identiques et opposés par leurs sommets. On peut dire, d'une autre façon, que la section à la forme d'un X fermé sur deux faces opposées.

Pour une utilisation ou lors d'un essai d'écrasement, les extrémités 12 et 13 sont soudées chacune sur une console, l'élément devant par sa déformation accumuler l'énergie engendrée par un choc. La déformation en accordéon de l'élément se réalise en conservant approximativement le gabarit de l'élément.

Des renforts locaux 11 peuvent être prévus entre les deux triangles 2 et 3, dans des plans perpendiculaires à la direction du choc. Ils sont avantageusement fixés par soudage et procurent à l'élément 1 une meilleure stabilité en torsion.

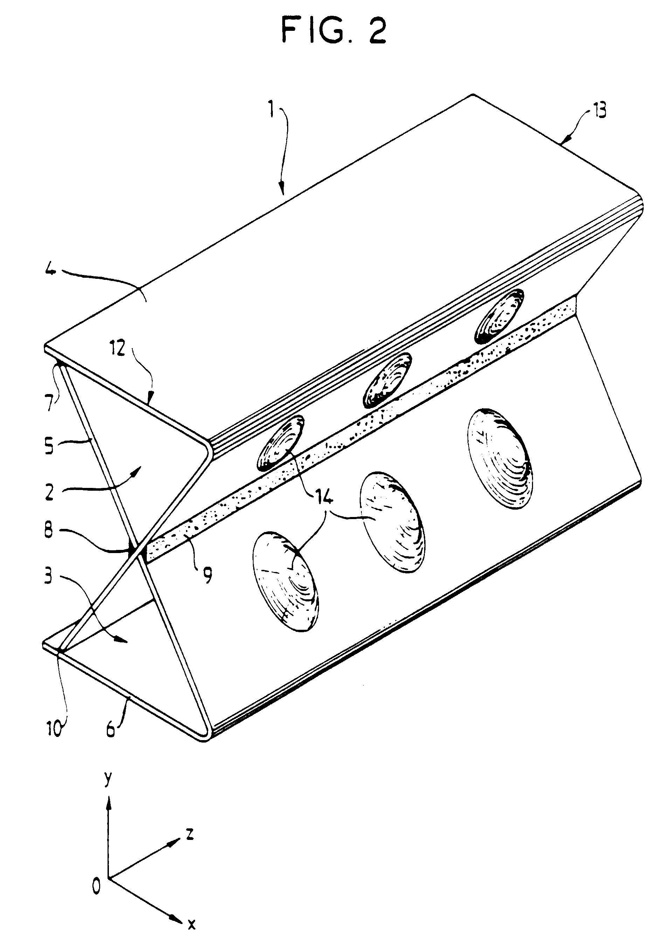

Dans la variante de réalisation représentée à la figure 2, les plaques 4, 5 et 6 sont embouties localement en des zones telles que celles référencées 14. Le calcul et l'expérimentation permettent de déterminer la forme et la position des emboutis.

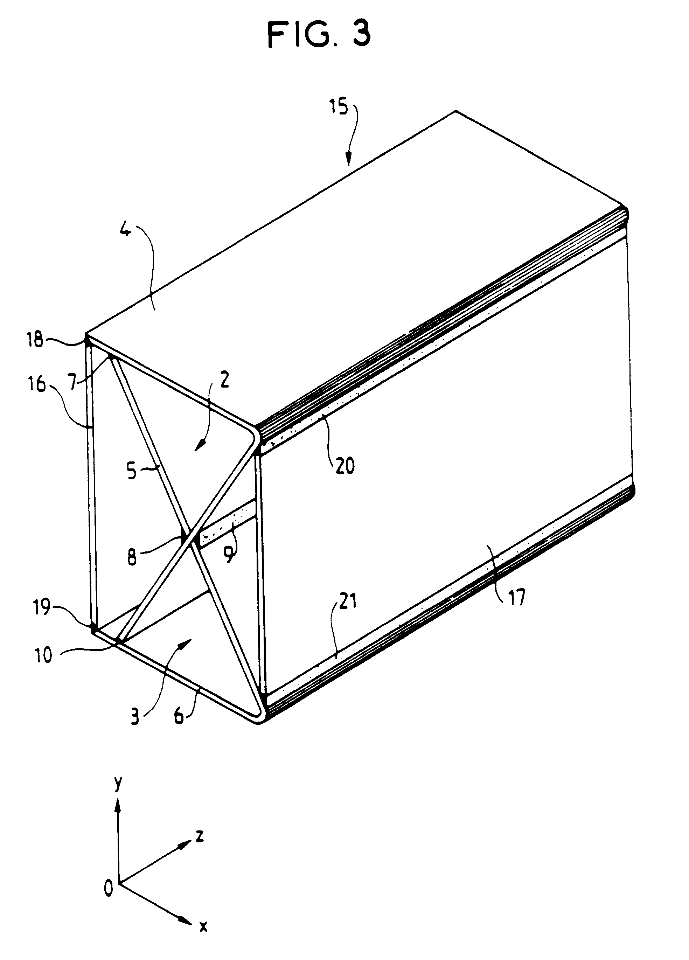

Le dispositif 15 représenté à la figure 3 est susceptible d'amortir des chocs d'énergie plus élevée que le dispositif décrit ci-dessus. La structure de base est la même que celle de la figure 1 où les mêmes éléments portent les mêmes références. Les angles entre les triangles 2 et 3 sont ici fermés par des plaques minces 16 et 17 soudées par des cordons de soudure respectivement 18, 19 et 20, 21 sur le reste de l'élément.

Lors d'un écrasement se produisant comme précédemment selon l'axe Oz, les plaques 16 et 17 forment des ondulations, le gabarit de l'élément restant approximativement le même.

Un dispositif d'amortissement peut associer plusieurs éléments tels que les éléments 1 et 15, en parallèle de façon à amortir un choc survenant sur une surface relativement grande. On peut utiliser un tel dispositif sur des véhicules ferroviaires pour amortir des chocs violents survenant en cas d'accident. Il est alors particulièrement avantageux d'intégrer ce dispositif dans un châssis de véhicule ferroviaire pour constituer une zone "fusible" en cas de choc.

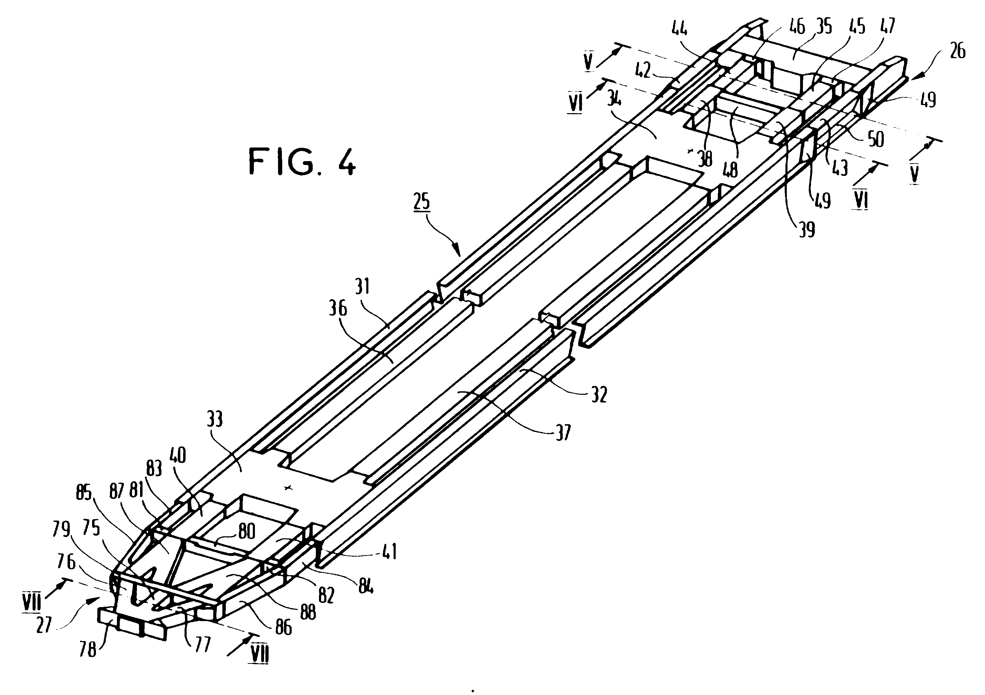

La figure 4 représente un châssis 25 de véhicule ferroviaire comportant deux dispositifs d'amortissement de choc 26 et 27 selon l'invention. Le châssis comprend deux brancards 31 et 32 entre lesquels sont disposées deux traverses pivot destinées à reposer sur des bogies: la traverse pivot avant 33 et la traverse pivot arrière 34. A l'arrière, les brancards 31 et 32 sont réunis par une traverse arrière 35. A l'avant, les brancards 31 et 32 et la traverse pivot avant 33 se prolongent par une partie avant incluant le dispositif d'amortissement 27.

Des longrines 36 et 37 réunissent les traverses pivot 33 et 34. D'autres longrines les complètent: les longrines 40 et 41 vers l'avant à partir de la traverse pivot 33.

A l'arrière, le dispositif d'amortissement de choc 26 s'intercale dans le châssis 25 entre la traverse arrière 35 et les extrémités des brancards 31, 32 et la traverse pivot 34. Le dispositif 26 comporte plusieurs éléments. Les éléments extérieurs 42 et 43 sont insérés dans les brancards 31 et 32. Les éléments intérieurs 44 et 45 prolongent les éléments 38 et 39 jusqu'à la traverse arrière 35.

Pour que les éléments absorbeurs d'énergie puissent s'écraser efficacement sous l'effet d'un choc violent, il faut que les autres constituants du châssis soient nettement moins déformables que les éléments 42, 43, 44 et 45. Des renforcements locaux de l'ossature du châssis peuvent alors être prévus.

L'espace environnant une traverse pivot étant généralement encombré, le dispositif 26 a été volontairement limité en longueur. On remarque sur la figure 4 que les éléments 42 et 43 sont plus longs que les éléments 44 et 45.

Les éléments 44 et 45 sont rendus solidaires par soudage de la traverse arrière 35 par l'intermédiaire de parties renforcées 46 et 47 s'évasant vers la traverse arrière 35. Ces parties 46 et 47 servent d'embases aux éléments 44 et 45. L'élément 44 est rendu solidaire par soudage de l'élément 38 avec interposition d'une plaque métallique servant d'embase pour l'élément 44. Il en va de même pour la liaison entre l'élément 45 et l'élément 39. Une traverse intermédiaire 48 est soudée entre les éléments 38 et 39 à proximité des éléments 44 et 45.

Les éléments 42 et 43 sont insérés par soudage aux brancards 31 et 32 avec interposition de plaques métalliques servant d'embases à ces éléments. Les brancards sont renforcés à leur jonction avec les éléments 42 et 43 par des pièces de renfort 49. Ces pièces de renfort ainsi que la proximité de la traverse pivot 34 et de la traverse arrière 35, rigidifiant les brancards, font que ces parties de brancards peuvent être considérées comme indéformables par rapport au dispositif d'amortissement.

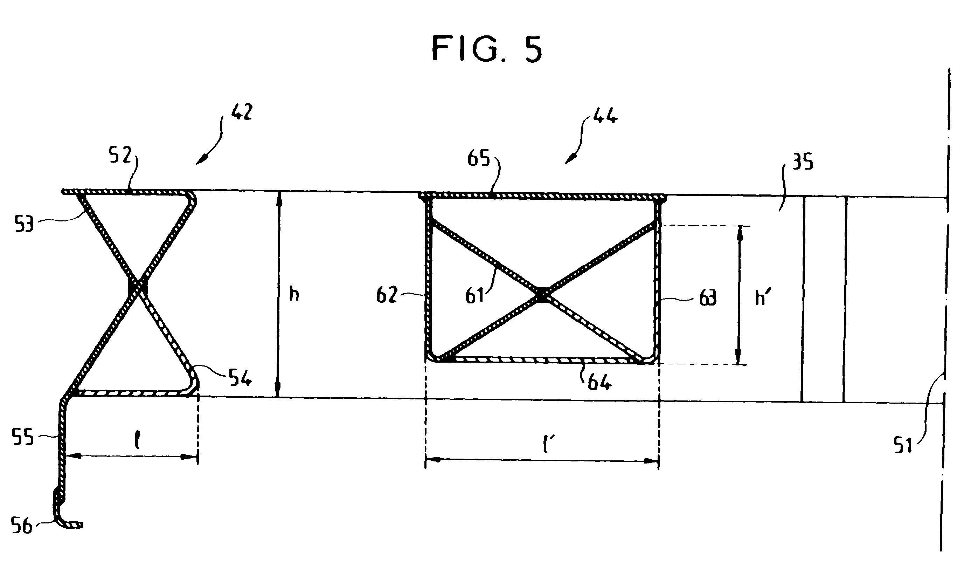

La figure 5 ne représente que la partie gauche de la coupe V-V indiquée sur la figure 4, la partie droite lui étant symétriquement identique. L'axe 51 représente l'axe central et vertical du véhicule. Les éléments 42 et 44 y sont vus en coupe. L'élément 42 est du type représenté à la figure 1. Il est formé à partir de plusieurs plaques minces 52, 53 et 54 pliées le cas échéant et soudées entre elles. Pour les besoins d'accrochage des tôles des faces latérales, il est nécessaire et non perturbant pour le système d'y adjoindre un appendice 56 situé en partie inférieure et soudé sur un prolongement 55 de la plaque 52.

L'élément 44 est du type représenté à la figure 3. Il est formé à partir de plusieurs plaques minces 61, 62, 63, 64 et 65 pliées le cas échéant et soudées entre elles. L'élément 44 a ainsi la même forme extérieure que les longrines du châssis.

Les concentrations des contraintes n'étant pas uniformes dans la section des éléments 42 et 44, il est possible de compenser ces différences de contraintes par des nuances dans les matériaux utilisés. Ainsi le châssis étant en acier à haute limite élastique (nuance E490D), les plaques 52, 53, 61, 62 et 65 peuvent être en acier de nuance E24, les plaques 63 et 64 en acier de nuance E36 et les plaques 55 et 56 en acier de nuance E490D.

A titre d'exemple, l'épaisseur des plaques peut être de 4 mm pour une hauteur h de 195 mm et une largeur 1 de 110 mm pour l'élément 42, et pour une hauteur h' de 130 mm et une largeur 1' de 220 mm pour l'élément 44.

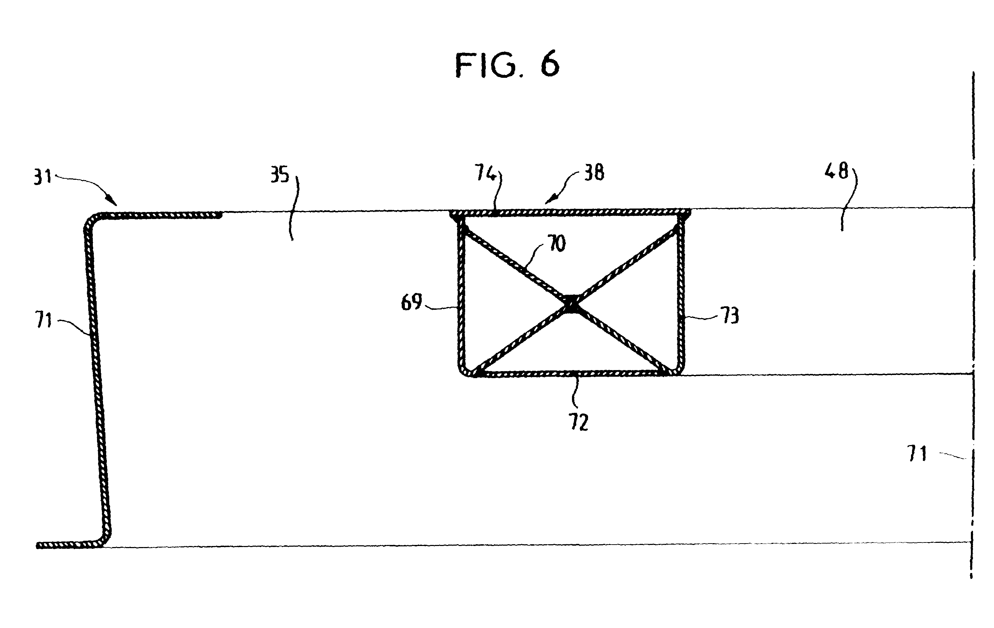

La figure 6 ne représente que la partie gauche de la coupe VI-VI indiquée sur la figure 4, la partie droite lui étant symétriquement identique. L'axe 71 représente l'axe central et vertical du véhicule. Le brancard 31 et l'élément 38 y sont vus en coupe. Le brancard 31 est formé d'une plaque 71 pliée.

L'élément 38 est constitué par soudure des plaques 69, 70, 72, 73 et 74.

A l'avant du châssis (voir figure 4), le dispositif d'amortissement de choc 27 comprend un élément central 75 placé selon l'axe central longitudinal du véhicule et deux éléments latéraux 76 et 77 disposés en V pointant vers l'avant. Ce dispositif se trouve entre une plaque d'extrémité avant 78 destinée à recevoir un choc éventuel et une traverse 79 reliée au reste du châssis par une structure mécanique rigide assurant une transmission des efforts entre la traverse 79 et la traverse pivot avant 33. Cette structure rigide comprend les longrines 40 et 41, les éléments de traverse 80, 81 et 82 et les poutres 83, 84, 85, 86, 87 et 88.

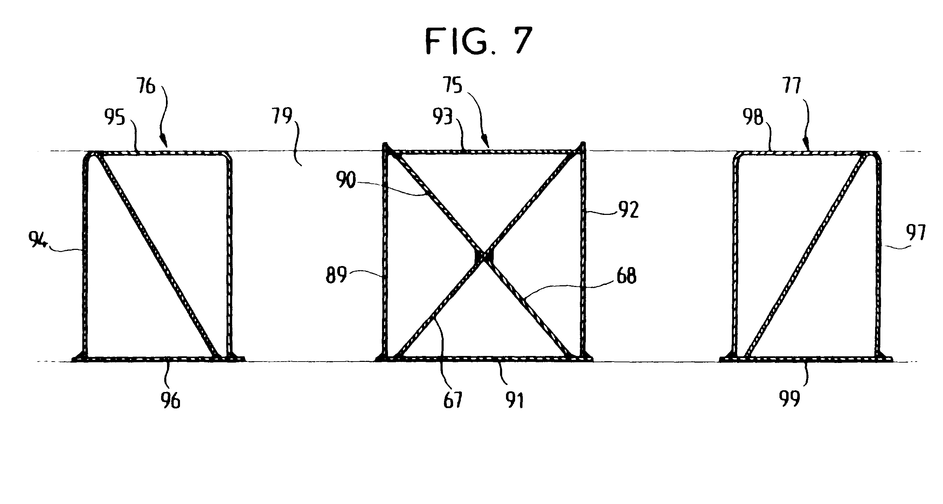

La figure 7 montre les éléments 75, 76 et 77 en coupe. L'élément 75 est du type représenté à la figure 3. Il est formé à partir de plusieurs plaques minces 89, 90,91, 92, 93, 67 et 68 soudées entre elles.

Les éléments 76 et 77 ne possèdent pas cette structure en X caractéristique de l'invention. L'élément 76 est formé à partir de plusieurs plaques minces 94, 95 et 96 pliées le cas échéant et soudées entre elles. La plaque 94 forme une diagonale pour le rectangle que forme la section de l'élément 76. Cette diagonale va du côté gauche en haut vers le côté droit en bas.

L'élément 77 est formé à partir de plusieurs plaques minces 97, 98 et 99 pliées le cas échéant et soudées entre elles. La plaque 97 forme une diagonale pour le rectangle que forme la section de l'élément 77. Cette diagonale va du côté droit en haut vers le côté gauche en bas.

Il entre également dans le cadre de la présente invention de réaliser le dispositif d'amortissement de choc par profilage et étirage.

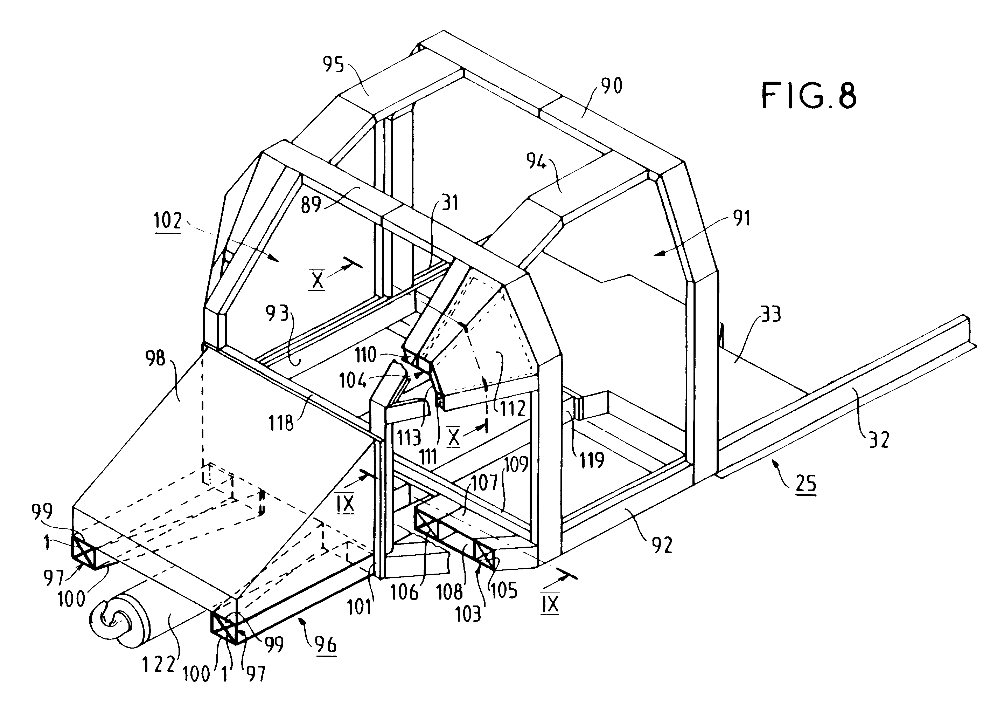

La figure 8 représente une ossature avant d'une caisse de véhicule ferroviaire comportant des premiers 97, des deuxièmes 98, des troisièmes 103 et des quatrièmes 104 dispositifs d'amortissement de choc obtenu selon les modes de réalisation décrits ci-après.

L'ossature avant de la caisse de véhicule ferroviaire comprend un châssis 25 constitué de deux brancards 31 et 32 entre lesquels est disposé une traverse pivot avant 33 reposant sur un bogie avant.

Un premier 89 et un second 90 anneau rigide constituent une cellule de sécurité 91. Des longrines 92 et 93 et des armatures 94 et 95 sont solidaires des anneaux rigide de manière à rigidifier la cellule de sécurité.

Une première zone déformable 96, composant la partie avant de l'ossature, est constituée des premiers 97 et des deuxièmes 98 dispositifs d'amortissement de choc ainsi que d'une barre d'attelage 122.

Les premiers dispositifs d'amortissement de choc 97 sont disposés, respectivement, de part et d'autre de l'axe central du châssis 25. Ces premiers dispositifs d'amortissement de choc ont une forme générale en trapèze et se composent chacun d'un élément longitudinal 1 conforme à l'invention dont les faces supérieures et inférieurs sont solidaires de plaques trapézoïdales 99 et 100.

Les deuxièmes dispositifs d'amortissement de choc 98 sont contitués d'un élément du type en nid d'abeille connu de l'état de la technique. Ces deuxièmes dispositifs d'amortissement de choc sont, par exemple, disposés sur les premiers dispositifs d'amortissement de choc 97, l'ensemble prenant appui contre une plaque de maintien 101.

La barre d'attelage 122 connu de l'état de la technique est disposé longitudinalement, de préférence entre les premiers éléments absorbeurs 97 dans la première zone déformable 96.

Une seconde zone déformable 102 est disposée entre la première zone déformable 96 et la cellule de sécurité 91.

La seconde zone déformable 102 se compose de troisièmes 103 et de quatrièmes 104 dispositifs d'amortissement de choc, respectivement dans la partie basse et dans la partie haute de cette seconde zone déformable.

Les troisièmes dispositifs d'amortissement de choc 103 se composent chacun de premiers 105 et de seconds 106 éléments absorbeurs conforme à l'invention. Ces premiers 105 et seconds 106 éléments absorbeurs sont disposés en forme de V et leurs faces supérieures et inférieures sont solidaires de plaques 107 et 108.

Les plaques 107 et 108 sont de préférence trapézoïdales de manière à amortir l'effort initial d'un choc frontal appliqué sur les troisièmes dispositifs d'amortissement de choc 103.

Les troisièmes dispositifs d'amortissement de choc sont disposés dans le plan du châssis 25 et prennent appui contre une traverse 109. La traverse 109 est solidaire à ses extrémités de la base du premier anneau rigide 89.

Les quatrièmes dispositifs d'amortissement de choc 104 se composent chacun de premiers 110 et de seconds 111 éléments absorbeurs. Ces premiers 110 et seconds 111 éléments absorbeurs sont disposés en forme de V et leurs faces supérieures et inférieures sont solidaires de plaques 112 et 113.

Les plaques 112 et 113 sont de préférence trapézoïdales de manière à amortir l'effort initial d'un choc frontal appliqué sur les quatrièmes dispositifs d'amortissement de choc 104.

Les quatrièmes dispositifs d'amortissement de choc sont disposés dans le prolongement de la partie supérieure du premier anneau rigide 89 et des deuxièmes éléments absorbeurs 98.

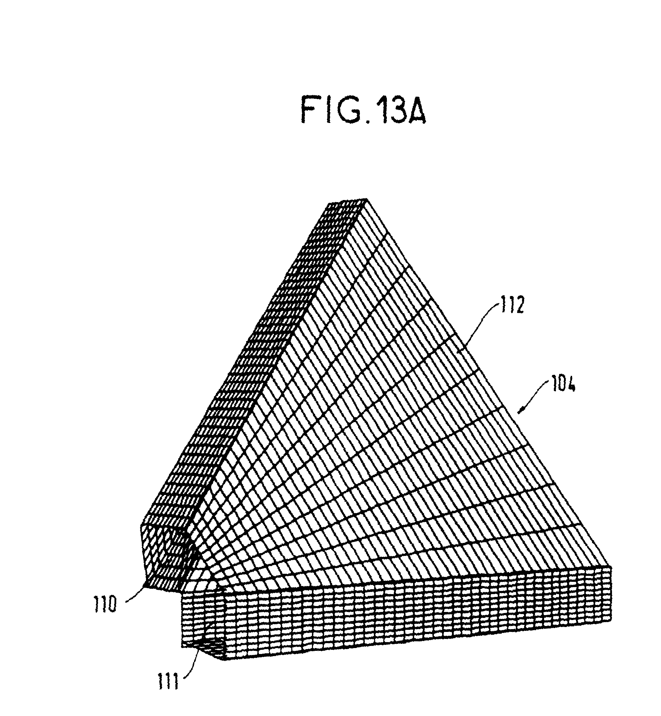

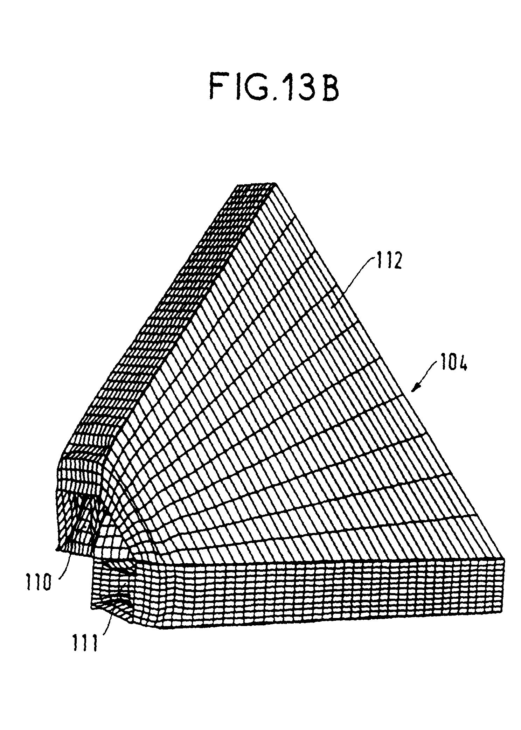

Selon la forme des extrémités de la partie supérieure du premier anneau rigide 89 sur lesquelles les dispositifs d'amortissement de choc 104 prennent appui, les plaques triangulaires 112 et 113 peuvent constituer un plan unique (figures 13 a et b) ou bien deux plans comme représentés à la figure 8.

Les autres extrémités des dispositifs d'amortissement de choc 104 prennent appui sur la plaque de maintien 101 par l'intermédiaire d'un cadre de soutien 118.

Un moyen de guidage 119 solidaire du châssis 25 est disposé longitudinalement parallèle à l'axe longitudinal du châssis 25.

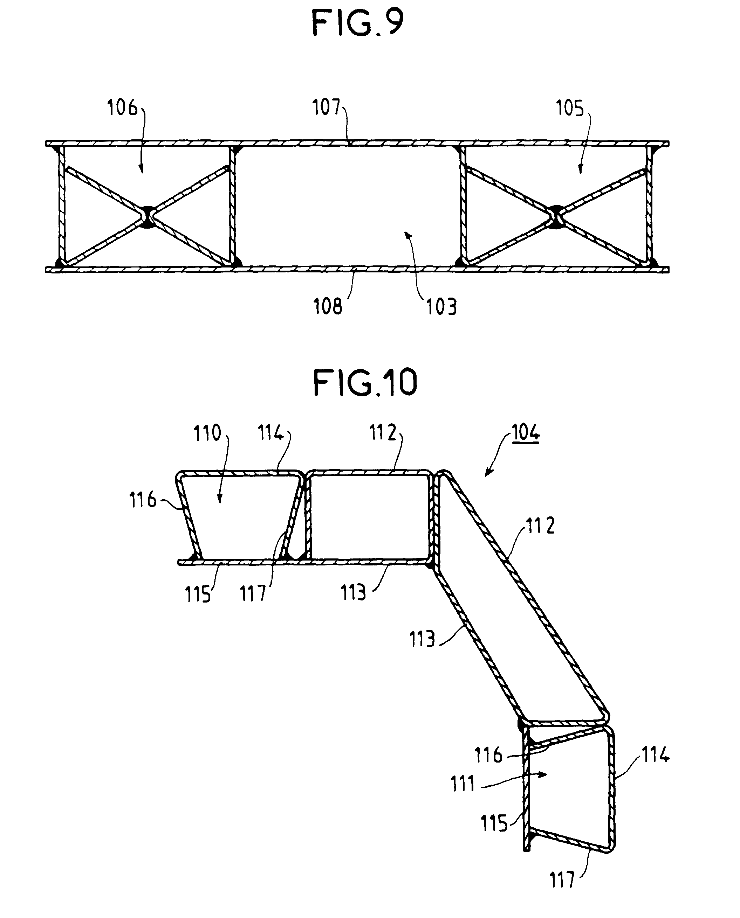

La figure 9 est une vue partielle de l'ossature de caisse de véhicule ferroviaire de la figure 8 selon la coupe IX-IX.

Les éléments 105 et 106 et les plaques trapézoïdales 107 et 108 y sont vus en coupe. Les éléments 105 et 106 sont du type représenté aux figures 1 à 3 et tels que décrits précédemment.

Les plaques trapézoîdales 107, 108 ont pour effet primordiale de maintenir sous tension les éléments longitudinaux absorbeurs 105, 106.

Comme décrit précédemment, la déformation des troisièmes dispositifs d'amortissement de choc 103 est une déformation plastique en accordéon de manière à ce que le gabarit du dispositif d'amortissement de choc soit conservé.

La figure 10 est une vue partielle de l'ossature de caisse de véhicule ferroviaire de la figure 8 selon la coupe X-X.

Les éléments 110 et 111 et les plaques trapézoïdales 112 et 113 y sont vus en coupe.

Les premiers 110 et seconds 111 éléments absorbeurs sont constitués chacun d'un seul élément longitudinal absorbeur différent de ceux représentés aux figures 1 à 3. La section de l'élément longitudinal présente la forme générale d'un rectangle dont deux des faces opposées 114 et 115 sont parrallèles et dont les deux autres faces opposées 116 et 117 forment avec l'une des faces parrallèles un élément longitudinal absorbeur de section transverse de forme générale triangulaire.

Du fait de la dissymétrie des premiers 110 et seconds 111 éléments absorbeurs, un choc frontal sur ces éléments a pour effet technique remarquable la torsion desdits éléments lors d'un choc frontal et non un effet de flanbage. Un tel effet technique se traduit sur le quatrième dispositif d'amortissement de choc 104 par une déformation de celui-ci dans un plan vertical se déplaçant dans le sens du choc à l'origine de la déformation. Cette déformation dans un plan vertical est liée à la présence des plaques trapézoîdales 112 et 113.

Comme décrit précédemment, la déformation des quatrièmes dispositifs d'amortissement de choc 104 est une déformation plastique en accordéon de manière à ce que le gabarit du dispositif d'amortissement de choc soit conservé.

Une conséquence primordiale des déformations dans des plans verticaux des troisièmes 103 et quatrièmes 104 dispositifs d'amortissement de choc est que le cadre de soutien 118 et le premier anneau rigide 89 restent tout deux parrallèle l'un par rapport à l'autre lors d'un choc frontal.

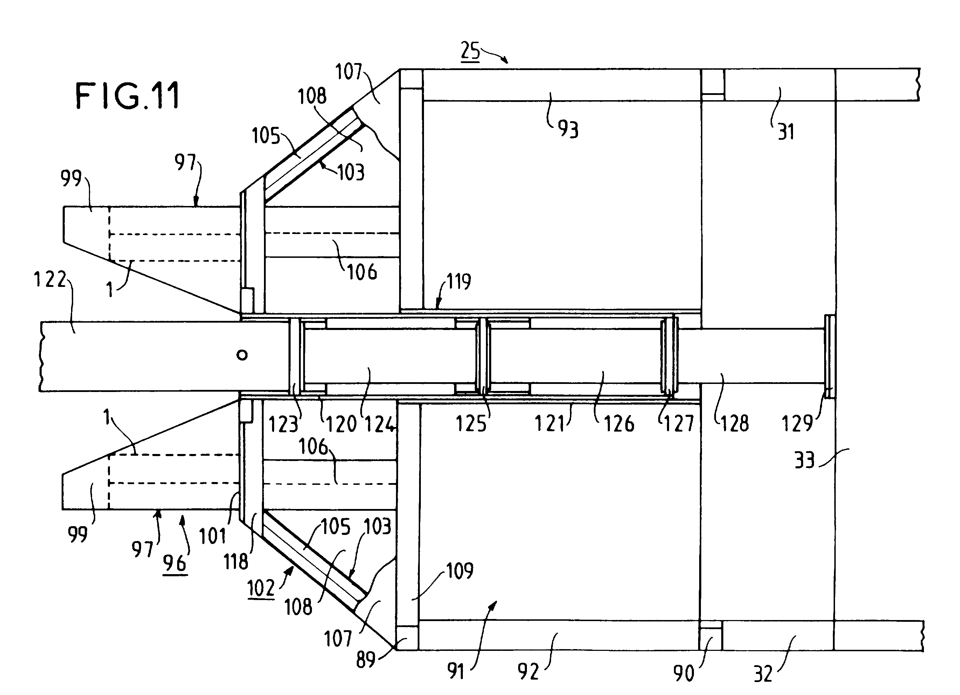

La figure 11 est une vue en coupe de l'ossature de la caisse de véhicule ferroviaire de la figure 8.

On retrouve sur la figure 11 le châssis 25 constitué des deux brancards 31 et 32 entre lesquels est disposé la traverse pivot avant 33 reposant sur le bogie avant.

Le premier 89 et le second 90 anneau rigide constituent la cellule de sécurité 91. Les longrines 92 et 93 sont solidaires des anneaux rigide.

La première zone déformable 96, composant la partie avant de l'ossature, est constituée des premiers 97 et des deuxièmes (non représenté) éléments absorbeurs ainsi que d'une barre d'attelage 122.

Les premiers dispositifs d'amortissement de choc 97 sont disposés, respectivement, de part et d'autre de l'axe central du châssis 25. Ces premiers dispositifs d'amortissement de choc ont une forme générale en trapèze et se composent chacun d'un élément longitudinal 1 conforme à l'invention.

Les premiers dispositifs d'amortissement de choc 97 prennent appui contre la plaque de maintien 101, laquelle est solidaire du cadre de soutien 118.

La seconde zone déformable 102 est disposée entre la première zone déformable 96 et la cellule de sécurité 91.

La seconde zone déformable 102 se compose des troisièmes 103 et des quatrièmes (non représentés) dispositifs d'amortissement de choc.

Les troisièmes dispositifs d'amortissement de choc 103 se composent chacun d'un premier 105 et d'un second 106 élément absorbeur conforme à l'invention, dont les faces supérieures et inférieures sont solidaires de plaques trapézoïdales 107 et 108.

Les troisièmes dispositifs d'amortissement de choc 103 sont disposés dans le plan du châssis 25 et prennent appui contre une traverse 109. La traverse 109 est solidaire à ses extrémités de la base du premier anneau rigide 89.

Le moyen de guidage 119 solidaire du châssis 25 est disposé longitudinalement parrallèle à l'axe longitudinal du châssis 25. Ce moyen de guidage 119 se compose, conformément au mode de réalisation préféré, du tiroir longitudinal 120 susceptible de coulisser dans le guide longitudinal 121.

Toujours selon le mode de réalisation préféré, le guide longitudinal 121 est fixe, solidaire du châssis 25 et est délimité par la longueur de la cellule de sécurité 91.

Le tiroir longitudinal 120 est fixé à l'une de ses extrémités, par exemple au niveau du cadre de soutien 118, de manière à coulisser dans le guide longitudinal 121 par l'autre de ses extrémités.

La barre d'attelage 122 est disposé longitudinalement, de préférence entre les premiers éléments absorbeurs 97 dans la première zone déformable 96.

Cette barre d'attelage 122 prend appui contre une première semelle d'appui 123 de telle manière que cette semelle d'appui 123 et l'extrémité de la barre d'attelage 122 soient susceptibles de coulisser dans le guide longitudinal 121.

Des premiers 124, deuxièmes 126 et troisièmes 128 éléments longitudinaux absorbeurs, tout trois conformes à l'invention, sont disposés libre de coulisser dans le tiroir longitudinal 120.

Ces éléments longitudinaux absorbeurs conformes à l'invention constituent alors, respectivement, des cinquièmes, sixièmes et septièmes dispositifs d'amortissement de choc.

Les premiers 124 et deuxièmes 126 éléments longitudinaux prennent appui contre une deuxième semelle d'appui 125 de telle manière que cette deuxième semelle d'appui 125 soit susceptible de coulisser dans le guide longitudinal 121.

Les deuxièmes 126 et troisièmes 128 éléments longitudinaux prennent appui contre la troisième semelle d'appui 127 de telle manière que cette troisième semelle d'appui 127 soient susceptibles de coulisser dans le tiroir longitudinal 120, voir dans le guide longitudinal 121.

Les troisièmes 128 éléments longitudinaux prennent appui contre une quatrième semelle d'appui 129, laquelle est solidaire de la traverse de pivot 33.

A titre d'exemple, le tableau 1 rassemble les principales données techniques de chacun des dispositifs d'amortissement de choc utilisés dans l'ossature avant d'une caisse de véhicule ferroviaire selon le mode de réalisation préféré de l'invention.

**Tableau 1**

| DISPOSITIF D'AMORTISSEMENT DE CHOC | ELEMENT LONGITUDINAL ABSORBEUR | MATERIAU (ACIER) | LARGEUR mm | HAUTEUR mm | EFFORT RECU kN |
|---|---|---|---|---|---|
| 97 (premier) | 1 | Z8 CN 12 | 250 | 150 | 1000 |
| 98 (deuxième) | connu de l'état de la technique | | | | |
| 103 (troisième) | 105 | Z8 CN 12 | 100 | 150 | 400 |
| | 106 | | | | |
| 104 (quatrième) | 110 | Z8 CN 12 | 200 | 150 | 900 |
| | 111 | | | | |
| 124 (cinquième) | 124 | Z8 CN 12 | 250 | 170 | 1100 |
| 126 (sixième) | 126 | Z8 CN 12 | 250 | 170 | 1400 |
| 128 (septième) | 128 | Z8 CN 12 | 250 | 250 | 1700-2500 |

Au cours d'un choc, par exemple frontal, entre le véhicule muni de dispositifs d'amortissement de choc selon l'invention et un autre véhicule ou une butée fixe en bout de voie, les dispositifs d'amortissement de choc subissent un écrasement.

Conformément à l'effet technique fondamental de l'invention, l'écrasement des dispositifs d'amortissement de choc se traduit par une déformation en accordéon des éléments longitudinaux absorbeurs. Cette déformation a lieu dans un plan vertical se déplaçant dans le sens du choc.

Comme indiqué précédemment, la déformation en accordéon des éléments se réalise en conservant approximativement le gabarit des éléments.

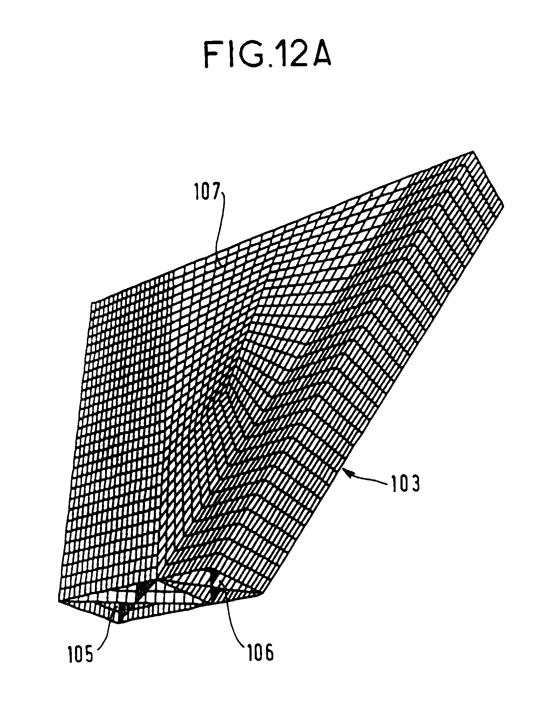

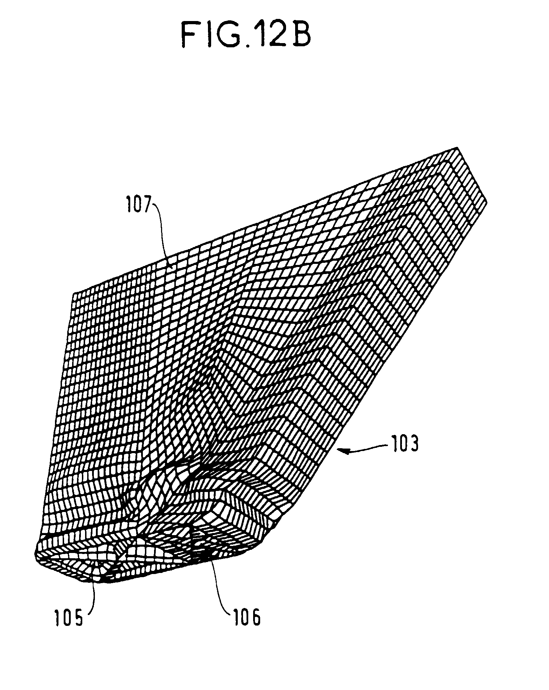

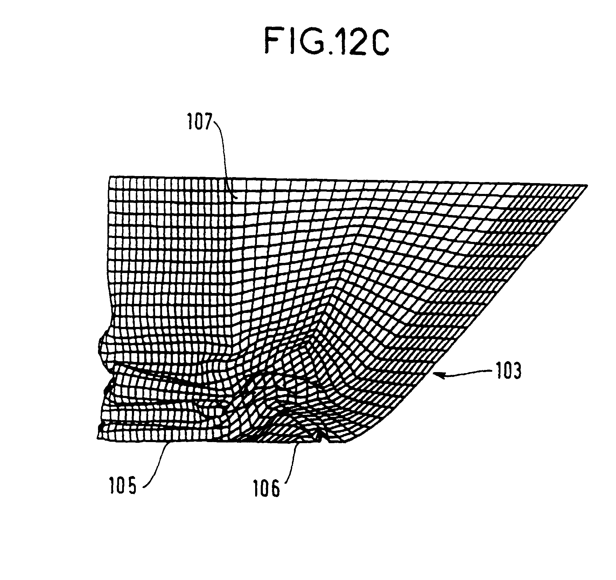

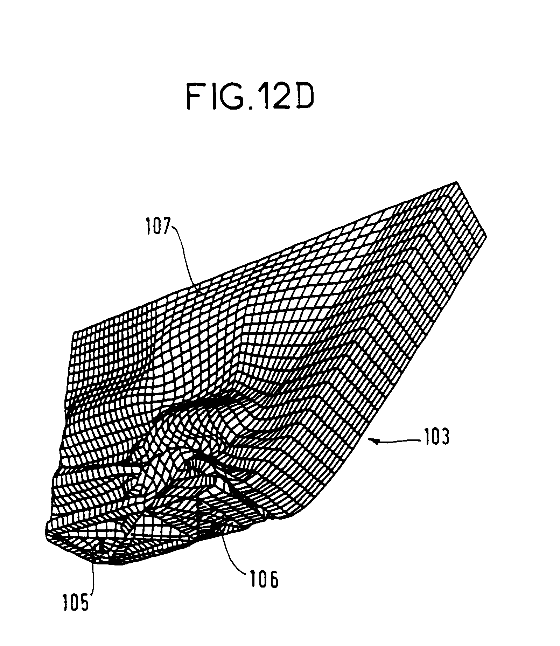

Les figures 12 a à d et 13 a et b représentent différents stades de l'évolution, respectivement des troisièmes 103 et des quatrièmes 104 dispositifs d'amortissement de choc, lors de leur écrasement.

Ces figures montrent la déformation en accordéon des dispositifs d'amortissement de choc ainsi que la conservation de leur gabarit.

Lors d'un choc frontal, les zones passagers et conducteur ne subissent aucune déformation plastique avant l'absorption de la totalité de l'énergie possible par les dispositifs d'amortissement de choc.

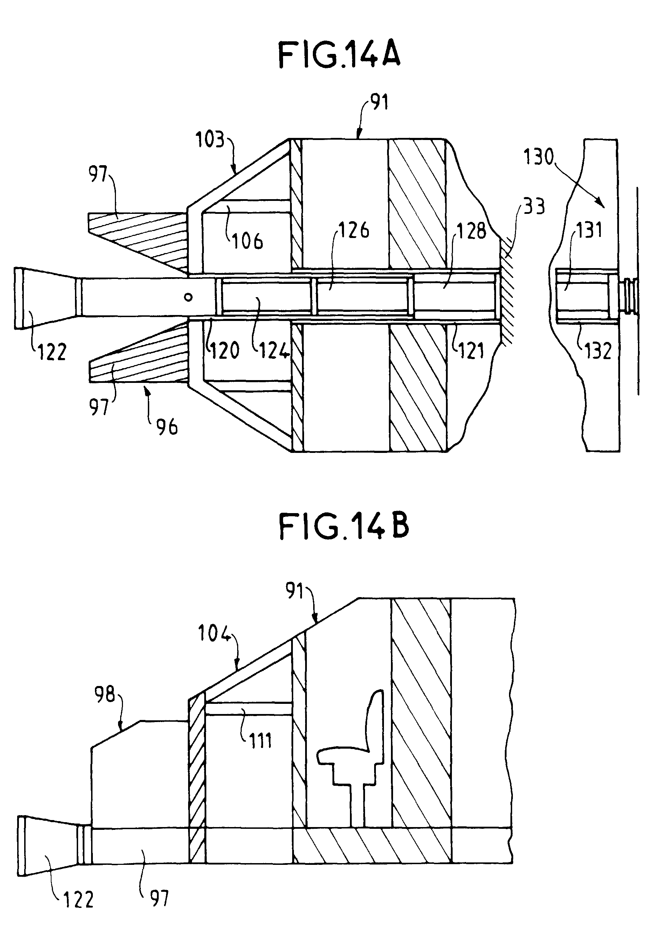

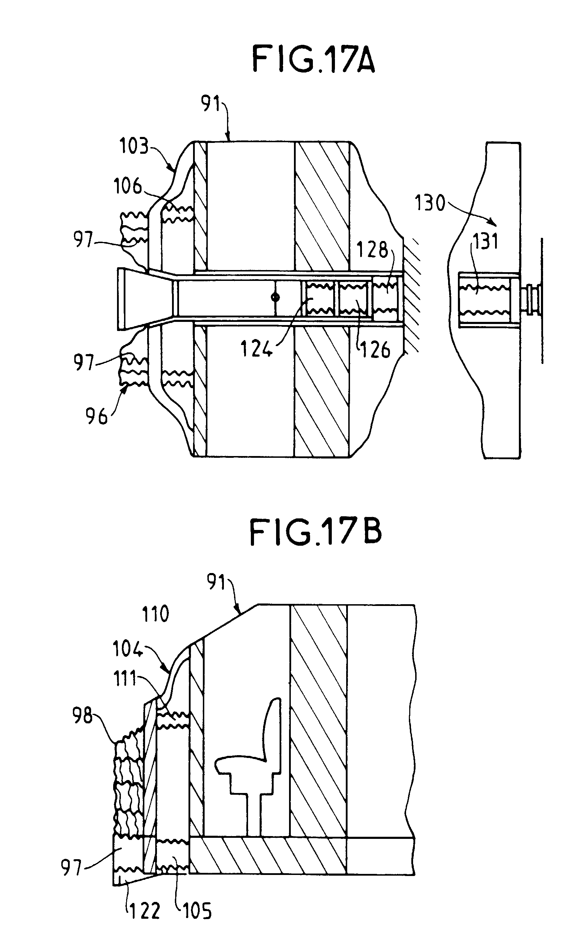

Les figures 14a,b à 17a,b représentent les quatre phases successives de déformation de l'ossature de la caisse de véhicule ferroviaire incorporant les dispositifs d'amortissement de choc selon l'invention.

Les mêmes références que précédemment indiquées sur ces figures désignent les mêmes éléments.

Sur les figures 14a,b à 17a,b apparaît une barre de liaison 130 disposée à l'extrémité arrière de l'ossature de la caisse du véhicule ferroviaire.

La barre de liaison 130 comporte, par exemple, un élément longitudinal absorbeur 131 et tel que représenté aux figures 1 à 3 dont l'extrémité externe est susceptible de coulisser dans un guide longitudinal 132 solidaire du châssis 25 de l'ossature.

La barre de liaison 130 constitue donc un huitième dispositif d'amortissement de choc.

A titre d'exemple, le tableau 2 donne les données techniques relatif à ce huitième dispositif d'amortissement de choc utilisés dans l'ossature arrière de la caisse du véhicule ferroviaire.

**Tableau 2**

| DISPOSITIF D'AMORTISSEMENT DE CHOC | ELEMENT LONGITUDINAL ABSORBEUR | MATERIAU (ACIER) | LARGEUR mm | HAUTEUR mm | EFFORT RECU kN |
|---|---|---|---|---|---|
| 130 (huitième) | 131 | Z8 CN 12 | | | 1100 |

La première phase, représentée aux figures 14 a et b, est adaptée pour des vitesses du véhicule comprises entre 0 et 3 m/s. Dans cette première phase, le choc est absorbé par la déformation élastique de la barre d'attelage 122.

Dans cette phase I, du fait de la valeur de la vitesse, le choc est du type "visco-élastique" et l'accélération efficace ne dépasse pas 3g.

La barre d'attelage 122 subit un déplacement élastique longitudinal de manière à s'introduire dans le tiroir longitudinal 120 sans déformation de l'ossature, en particulier des dispositifs d'amortissement de choc.

A titre d'exemple, le déplacement longitudinale de la barre d'attelage 122 est de l'ordre de 190 mm par rapport à sa position initiale. La position initiale (avant le choc) et la position finale (en fin de phase I) de la barre d'attelage 122 sont représentées aux figures 14 a et b.

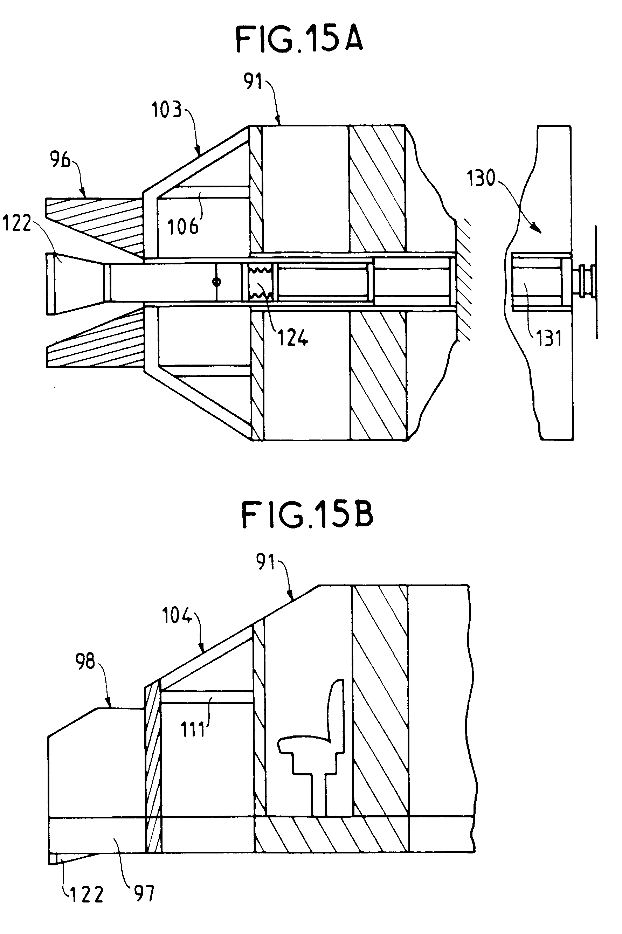

La deuxième phase, représentée aux figures 15 a et b, est adaptée pour des vitesses du véhicule comprises entre 3 et 5 m/s.

Dans cette phase II, l'accélération efficace ne dépasse pas 5 g.

La barre d'attelage 122 subit un déplacement longitudinal et continu à s'introduire dans le tiroir longitudinal 120.

L'énergie est absorbée par la déformation plastique des cinquièmes 124 et huitièmes 130 dispositifs d'amortissement de choc.

A titre d'exemple, le déplacement longitudinal de la barre d'attelage 122 est de l'ordre de 550 mm par rapport à sa position en fin de phase I, soit un déplacement de 740 mm par rapport à sa position initiale. La position initiale et la position finale (en fin de phase II) de la barre d'attelage 122 sont représentées aux figures 15 a et b.

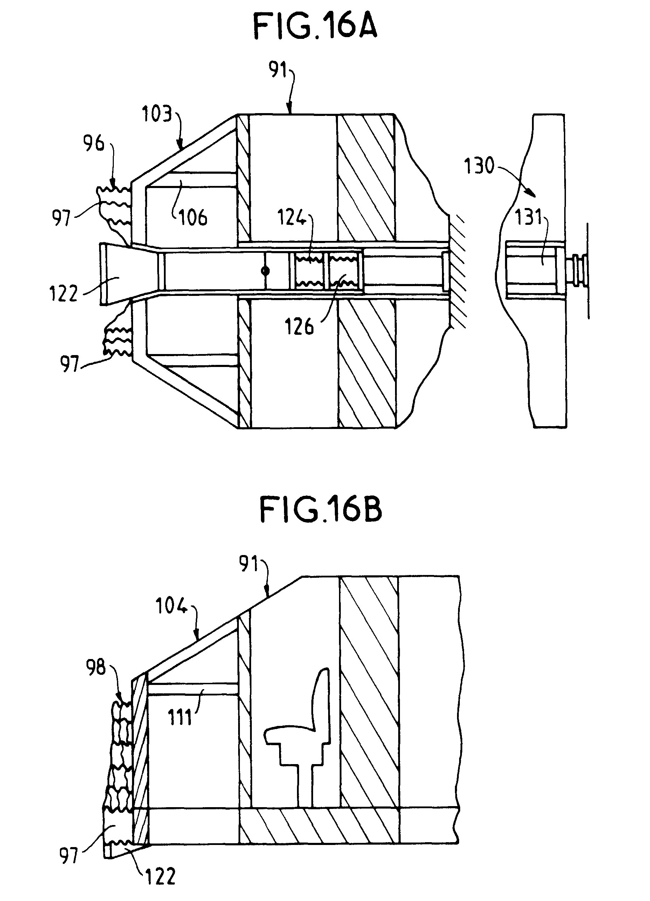

La troisième phase, représentée aux figures 16 a et b, est adaptée pour des vitesses du véhicule comprises entre 5 et 10 m/s.

Dans cette phase III, la barre d'attelage 122 subit, à nouveau, un déplacement longitudinal et continu à s'introduire dans le tiroir longitudinal 120.

L'énergie est absorbée par la déformation plastique des premiers 97, deuxièmes 98 et sixièmes 126 dispositifs d'amortissement de choc.

A titre d'exemple, le déplacement longitudinal de la barre d'attelage 122 est de l'ordre de 576 mm par rapport à sa position en fin de phase II, soit un déplacement de l'ordre de 1286 mm par rapport à sa position initiale. La position initiale et la position finale (en fin de phase III) de la barre d'attelage 122 sont représentées aux figures 16 a et b.

La quatrième phase, représentée aux figures 17 a et b, est adaptée pour des vitesses du véhicule supérieures à 10 m/s.

Dans cette phase IV, la barre d'attelage 122 subit à nouveau un déplacement longitudinal et continu à s'introduire dans le tiroir longitudinal 120.

L'énergie est absorbée par la déformation plastique des troisièmes 103, quatrièmes 104 et septièmes 128 dispositifs d'amortissement de choc.

A titre d'exemple, le déplacement longitudinal de la barre d'attelage 122 est de l'ordre de 480 mm par rapport à sa position en fin de phase III, soit un déplacement de l'ordre de 1766 mm par rapport à sa position initiale. La position initiale et la position finale (en fin de phase IV) de la barre d'attelage 122 sont représentées aux figures 17 a et b.

## Revendications

1. Un dispositif d'amortissement de choc comprenant un élément (105,106) qui s'étend suivant une direction longitudinale et qui est apte à absorbe l'énergie engendrée par un choc se produisant suivant ladite direction en se déformant suivant cette direction, l'élément étant constitué en plaque mince, caractérisé en ce qu'il comprend une première plaque mince (16) parallèle à une seconde plaque mince (17) s'étendant suivant ladite direction longitudinale et en ce qu'il présente une section, dans un plar perpendiculaire à ladite direction longitudinale, ayant la forme de deux triangles ayant des bases parallèles et un sommet commun, les bases des deux triangles étant reliées entre elles par la première et par la seconde plaque mince.

2. Le dispositif selon la revendication 1, dans lequel ledit élément comporte des renforts (11) disposés dans des plans perpendiculaires à ladite direction.

3. Le dispositif selon la revendication 1, dans lequel ledit élément comporte des zones embouties (14).

4. Le dispositif selon l'une des revendications 1 à 3, dans lequel ledit élément est en acier.

5. Le dispositif selon l'une des revendications 1 à 4, dans lequel ladite section présente des parties ayant des coefficients de limite élastique différents.

6. Le dispositif selon l'une des revendications 1 à 5, dans lequel ledit élément est constitué de plaques minces (5) pliées et soudées entre elles pour former ladite section.

7. Un véhicule comprenant un châssis (25) et une cellule de sécurité (91) disposée à l'avant du châssis, la cellule de sécurité ayant une ossature dont la partie frontale comporte une première zone déformable (96) en cas de choc frontal, cette première zone déformable comprenant un premier dispositif d'amortissement de choc (97) selon l'une des revendications 1 à 6 de part et d'autre de l'axe central du châssis, ce premier dispositif d'amortissement de choc s'étendant longitudinalement parallèlement à cet axe central.

8. Le véhicule selon la revendication 7, dans lequel l'ossature de la cellule de sécurité (91) comprend un anneau rigide (89) solidaire du châssis et séparé de la première zone déformable par une seconde zone déformable (102) en cas de choc frontal, cette seconde zone déformable (102) comprenant un second (106) et un troisième (105) dispositif d'amortissement de choc selon l'une des revendications 1 à 6 de part et d'autre de l'axe central du châssis, le second et le troisième dispositif d'amortissement de choc étant disposés en V et étant solidaires l'un de l'autre par des plaques trapézoïdales (107,108), le second dispositif d'amortissement de choc s'étendant longitudinalement parallèlement à l'axe central du châssis.

9. Le véhicule selon la revendication 8, dans lequel le châssis (25) comprend deux brancards (31,32) parallèles à l'axe central du châssis et séparés l'un de l'autre par une traverse (33) disposée en arrière de la cellule de sécurité (91), une barre d'attelage (122) qui traverse la première zone déformable (96) parallèlement à l'axe central du châssis, un guide longitudinal (121) qui est solidaire du châssis et de la cellule de sécurité et qui s'étend parallèlement à l'axe central du châssis, un tiroir longitudinal (120) ayant une extrémité solidaire de la seconde zone déformable (102) et une autre extrémité apte à coulisser sans déformation à l'intérieur du guide longitudinal, la barre d'attelage ayant une extrémité engagée à l'intérieur du tiroir longitudinal et prenant appui contre la traverse par l'intermédiaire d'au moins un dispositif amortisseur de choc (124) selon l'une des revendications 1 à 6 qui s'étend longitudinalement parallèlement à l'axe central du châssis à l'intérieur du guide ou du tiroir entre ladite extrémité de la barre d'attelage et la traverse.

10. Le véhicule selon la revendication 9, dans lequel il est prévu plusieurs dispositifs d'amortissement de choc (124,126,128) selon l'une des revendications 1 à 6 disposés en série entre ladite extrémité de la barre d'attelage et la traverse.

## Patentansprüche

1. Eine Vorrichtung zur Stoßdämpfung, die ein in einer Längsrichtung verlaufendes Element (105, 106) umfaßt, das geeignet ist, die durch einen Stoß entlang der genannten Längsrichtung erzeugte Energie aufzunehmen, indem es sich entlang dieser Richtung verformt, wobei das Element aus einer dünnen Platte gebildet wird, **dadurch gekennzeichnet, daß** sie eine erste dünne Platte (16) und parallel dazu eine zweite dünne Platte (17) aufweist, die entlang der genannten Längsrichtung verlaufen, und daß sie in einer senkrecht zur genannten Langsrichtung stehenden Ebene einen Querschnitt in der Form von zwei Dreiecken mit parallelen Basen und einer gemeinsamen Spitze hat, wobei die Basen der beiden Dreiecke untereinander durch die erste und durch die zweite dünne Plane verbunden sind.

2. Die Vorrichtung nach Anspruch 1, bei welcher das genannte Element Verstärkungen (11) aufweist, die in senkrecht zur genannten Richtung stehenden Ebenen angeordnet sind.

3. Die Vorrichtung nach Anspruch 1, bei welcher das genannte Element ausgebuchtete Bereiche (14) aufweist.

4. Die Vorrichtung nach einem der Ansprüche 1 bis 3, bei welcher das genannte Element aus Stahl ist.

5. Die Vorrichtung nach einem der Ansprüche 1 bis 4, bei welcher der genannte Querschnitt Teile mit verschiedenen Koeffizienten für die Elastizitätsgrenze aufweist.

6. Die Vorrichtung nach einem der Ansprüche 1 bis 5, bei welcher das genannte Element aus dünnen umgebogenen Platten (5) gebildet wird, die untereinander verschweißt sind, um den genannten Querschnitt zu bilden.

7. Ein Fahrzeug, das einen Unterbau (25) und eine vor dem Unterbau angeordnete Sicherheitszelle (91) umfaßt, wobei die Sicherheitszelle eine Tragstruktur hat, deren frontaler Teil einen ersten im Fall eines frontalen Stoßes verformbaren Bereich (96) aufweist, wobei dieser erste verformbare Bereich eine erste Vorrichtung zur Stoßdämpfung (97) gemäß einem der Ansprüche 1 bis 6 beiderseits der Mittelachse des Unterbaus aufweist, und diese erste Vorrichtung zur Stoßdämpfung parallel zu dieser Mittelachse in Längsrichtung verlauft.

8. Das Fahrzeug nach Anspruch 7, bei welchem die Tragstruktur der Sicherheitszelle (91) einen fest mit dem Unterbau verbundenen starren Ring (89) aufweist, der von dem ersten verformbaren Bereich durch einen zweiten im Fall eines frontalen stoßes verformbaren Bereich (102) getrennt ist, und dieser zweite verformbars Bereich (102) eine zweite (106) und eine dritte (105) Vorrichtung zur Stoßdämpfung gemäß einem der Ansprüche 1 bis 6 beiderseits der Mittelachse des Unterbaus aufweist, wobei die zweite und die dritte Vorrichtung zur Stoßdämpfung in Gestalt eines V angeordnet und über trapezförmige Platten (107, 108) fest miteinander verbunden sind und die zweite Vorrichtung zur Stoßdämpfung parallel zur Mittelachse des Unterbaus in Längsrichtung verläuft.

9. Das Fahrzeug nach Anspruch 8, bei welchem der Unterbau (25) zwei Längsträger (31, 32) die in paralleler Richtung zur Mittelachse des Unterbaus verlaufen und voneinander durch einen rückwärtig von der Sicherheitszelle (91) angeordneten Querträger (33) getrennt sind, eine Kupplungsstange (122), die den ersten verformbaren Bereich (96) in paralleler Richtung zur Mittelachse des Untcrbaus durchquert, eine fest mit dem Untcrbau und der Sicherheitszelle verbundene Längsführung (121), die parallel zur Mittelachse des Unterbaus verläuft, einen Längsschieber (120) mit einem fest mit dem zweiten verformbaren Bereich (102) verbundenen Ende und einem anderen Ende, das geeignet ist, sich ohne Verformung innerhalb des Längsführung zu verschieben, aufweist, wobei die Kupplungsstange ein in das Innere der Längsführung eingreifendes Ende hat, das mittels wenigstens einer Vorrichtung zur Stoßdämpfung (124) gemäß einem der Ansprüche 1 bis 6, die parallel zur Mittelachse des Unterbaus im Inneren der Führung oder des Schiebers zwischen dem genannten Ende der Kupplungsstange und dem Querträger in Längsrichtung verläuft, zur Anlage gegen den Querträger kommt.

10. Das Fahrzeug nach Anspruch 9, bei welchem zwischen dem genannten Ende der Kupplungsstange und dem Querträger mehrere in Reihe angeordnete Vorrichtungen zur Stoßdämpfung (124, 126, 128) gemäß einem der Ansprüche 1 bis 6 vorgesehen sind.

## Claims

1. An impact-absorber device comprising a member (105, 106) which extends in a longitudinal direction and which is capable of absorbing the energy generated by an impact in said direction, the member being made from thin plate, the device being characterized in that it comprises a first thin plate (16) that is parallel to a second thin plate (17) extending in said longitudinal direction, and in that it has a cross-section, in a plane perpendicular to said longitudinal direction, in the shape of two triangles having parallel bases and a common vertex, the base of the triangles being connected together via the first and second thin plates.

2. The device according to claim 1, wherein said member has reinforcements (11) in planes perpendicular to said direction.

3. The device according to claim 1 wherein said member has stamped areas (14).

4. The A device according to any one of claims 1 to 3 wherein said member is made of steel.

5. The device according to any one of claims 1 to 4 wherein said cross-section has parts with different yield stresses.

6. The device according to any one of claims 1 to 5 wherein said member comprises thin plates (5) bent and welded together to form said cross-section.

7. A vehicle comprising a chassis (25) and a safety cage (91) disposed at the front of the chassis, the security cell including a framework having a front part that includes a first deformable area (96) in the event of a frontal impact, said first deformable area comprising a first impact-absorber device (97) according to any one of claims 1 to 6 on either side of the central axis of the chassis, said first impact-absorber device extending longitudinally parallel to said central axis.

8. The vehicle according to claim 7, in which the framework of the safety cage (91) comprises a rigid ring (89) fastened to the chassis and separated from the first deformable area by a second deformable area (102) in the event of a frontal impact, said second deformable area (102) comprising second (106) and third (105) impact-absorber devices according to any one of claims 1 to 6 on either side of the central axis of the chassis, the second and third impact-absorber devices being disposed in a V-shape and being fastened together by trapezoidal plates (107, 108), the second impact-absorber device extending longitudinally parallel to the central axis of the chassis.

9. The vehicle according to claim 8, in which the chassis (25) comprises two side sills (31, 32) parallel to the central axis of the chassis and separated from each other by a beam (33) disposed at the rear of the safety cage (91), a coupling bar (122) which passes through the first deformable area (96) parallel to the central axis of the chassis, a longitudinal guide (121) which is fastened to the chassis and to the safety cage and which extends parallel to the central axis of the chassis, a longitudinal slider (120) having one end fastened to the second deformable area (102) and another end that is capable of sliding without deformation inside the longitudinal guide, the coupling bar having one end engaged inside the longitudinal slider and bearing against the beam by means of at least one impact-absorber device (124) according to any one of claims 1 to 6 which extends longitudinally parallel to the central axis of the chassis inside the guide or the slider between said end of the coupling bar and the beam.

10. The vehicle according to claim 9, in which a plurality of impact-absorber devices (124, 126, 128) are provided according to any one of claims 1 to 6, disposed in series between said end of the coupling bar and the beam.
